# EUROPEAN PATENT APPLICATION

(11) **EP 2 502 779 A1**
(43) Date of publication of application: **26.09.2012**
(21) Application number: 09852642.9
(22) Date of filing: 24.12.2009
(51) Int. Cl.: B60N 2/02

(54) **VEHICLE SEAT**

(30) Priority: 22.12.2009 RU 2009147329
(71) Applicant: Rostock Biotech Research Ltd., Tortola (VG)
(72) Inventor: NEKRASOV, Andrey Dmitrievich, Novosibirskaya obl., 630099 (RU)
(74) Representative: Bucher, Ralf Christian
(86) International application number: PCT/RU2009/000717
(87) International publication number: WO 2011/078718

(57) **Abstract**

The technical result of the present invention is the possibility to maintain and immobilize the natural physiological curves of the spine during the time that a person is seated on the seat. This technical result is achieved in that the vehicle seat comprises a seat with a back and a headrest, wherein a pad is provided on the seat back at the level of the lumbar region of the spine so as to be capable of vertical and horizontal movement, the headrest is mounted so that the vertical position thereof and its inclination angle to the horizontal can be adjusted, and is provided with a pad in the area of the cervical region of the spine, said pad being mounted so that the vertical position thereof can be adjusted, and the back is mounted so that the inclination angle thereof relative to the seat can be adjusted, wherein the pads may have a constant volume or a variable volume.

## Description

### TECHNICAL FIELD

This utility model relates to vehicle manufacture, in particular to alternative designs of vehicle chairs.

### BACKGROUND ART

A prior art vehicle chair comprises a seat and seatback, with a headrest on top (Russian Patent RU 2,093,382 C1, October 20, 1997).

The prior art vehicle chair is disadvantageous because it does not offer convenience for a person's back and does not follow the natural physiological curvatures of the spine.

### DISCLOSURE OF INVENTION

The claimed invention is aimed at developing a chair of simple design that is convenient to use and allows the chair to be adjusted in accordance with a person's individual anthropological characteristics while retaining the natural physiological curvatures of the person's spine.

The technical result of the claimed chair is that a person can remain in the chair working or sitting without changing the position of his/her back in the chair set by the chair pads and follow (retain) the physiological curvatures of the neck and lumbar parts of the spine for as long as he/she remains in the chair. In this way, the claimed design implements the "back protection" principle under which the spine retains its natural physiological curvatures to prevent intervertebral disks from being forced into the spinal channel and damage being done to the nervous structures, and disk-related lumbar pain developing afterward.

The technical result is achieved by a vehicle chair comprising a seat and backrest having a headrest at top such that the seat backrest is provided with a pad movable vertically and horizontally at the level of the lumbar part of the spine and a headrest capable of changing its vertical position and angle of inclination to the horizontal and provided with a pad in the neck part of the spine, the backrest being capable of changing its angle of inclination to the seat and the pads having a constant or variable volume.

The vertical position of the pads is varied by pad position variation units.

The pad position variation units can be designed as zippers provided in the slits extending along the median vertical line of the backrest and headrest of the seat and a vertical slot inside the backrest and headrest.

The pads may have their volume changed by an inflation unit.

The pads may be designed to be moved horizontally by a mechanical extension unit.

The pads may be made of a resilient or plastic material, or a "shape retention" material that can fill completely the physiological curvatures (lordoses) of the lumbar and neck parts of the spine.

### BRIEF DESCRIPTION OF DRAWINGS

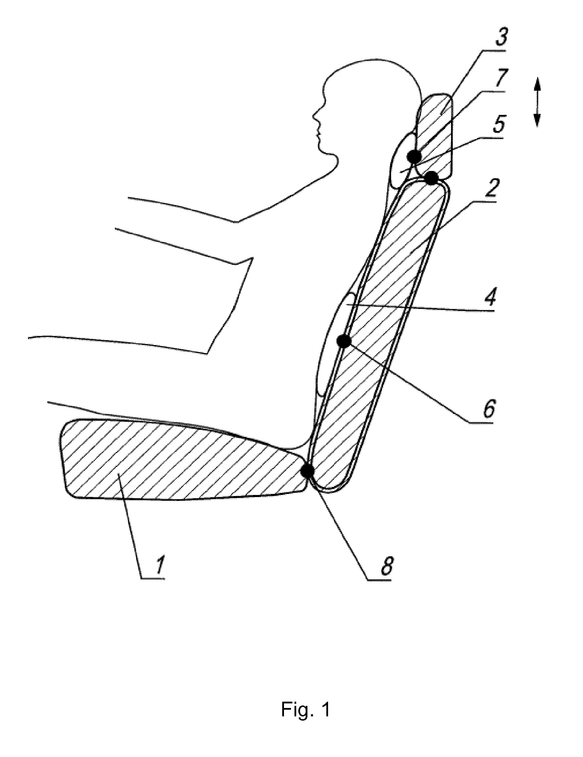

The accompanying drawing shows a general view of the claimed vehicle chair.

### BEST MODE FOR CARRYING OUT THE INVENTION

The vehicle chair comprises a seat 1 having a backrest 2 and headrest 3, the backrest 2 of the seat having a pad 4 capable of sliding vertically and horizontally and fitted at the level of the lumbar part of the spine, and the headrest 3 being capable of varying its vertical position and its angle of inclination to the horizontal and being provided with a pad 5 in the area of the neck part of the spine, said neck pad being capable of varying its position. The backrest 2 may be caused by a unit 8 to vary its angle of inclination to the seat 1, and the pads 4 and 5 may have a constant or variable volume.

The vertical position of the pads is varied by pad position variation units 6 and 7. A pad position variation unit may be a zipper provided in the slit extending along the median vertical line of the backrest and headrest of the seat and a vertical slot (not shown) provided inside the backrest and headrest.

The pads may be caused to vary their volume by an inflation unit (not shown) and slide horizontally by a mechanical movement unit (not shown). The pads may be made of a resilient or plastic material, or from a "shape retention" material capable to filling completely the physiological curvatures of the lumbar and neck parts of the spine.

While a person remains in the chair, his or her neck and lumbar lordoses are maintained by the sliding pads to prevent dislocation of the intervertebral disks and development of disk radicle conflict and other pathological events in the spinal channel.

The claimed design allows a person to avoid changes in the position of his or her back maintained by the pads in the seat for the full duration of his or her work in, or occupancy of, the chair and the physiological curvatures in the neck and lumbar parts of his or her spine to be retained (maintained) at work.

The claimed design, therefore, implements the "back protection" principle under which the natural physiological curvatures of the spine are maintained and retained at work.

### INDUSTRIAL APPLICABILITY

The claimed chair can be used in various vehicles - passenger cars, trucks, farm machines, and so on.

## Claims

1. A vehicle chair comprising a seat having a backrest and headrest, the backrest being provided with a pad movable vertically and horizontally at the level of the lumbar part of a person's spine; the headrest being capable of varying its vertical position and its angle of inclination to the horizontal and being provided with a pad in the area of the neck part of the spine, and the headrest pad being capable of varying its vertical position; the backrest being capable of varying its angle of inclination to the horizontal, and the pads having a constant or variable volume.

2. A vehicle chair as claimed in claim 1, wherein the vertical position of the pads is varied by pad position variation units.

3. A vehicle chair as claimed in claim 1, wherein a pad position variation unit is formed by zippers provided on the median vertical line of the chair backrest and headrest and a vertical slot provided inside the backrest and headrest.

4. A vehicle chair as claimed in claim 1, wherein the volume of the pads may be varied by an inflation unit.

5. A vehicle chair as claimed in claim 1, wherein the pads can be moved horizontally by a mechanical extension unit.

6. A vehicle chair as claimed in claim 1, wherein the pads are made of a resilient or plastic material, or a "shape retention" material that fills completely the physiological lordoses of the lumbar and neck parts of the spine.
